# EUROPÄISCHE PATENTANMELDUNG

(11) **EP 4 321 307 A1**
(43) Veröffentlichungstag der Anmeldung: **14.02.2024**
(21) Anmeldenummer: 22189323.3
(22) Anmeldetag: 08.08.2022
(51) Int. Cl.: B25J 9/16

(54) **VERFAHREN ZUM BETRIEB EINES MODULAREN ROBOTERS, MODULARER ROBOTER, KOLLISIONSSCHUTZSYSTEM, COMPUTERPROGRAMMPRODUKT**

(71) Anmelder: Siemens Aktiengesellschaft, 80333 München (DE)
(72) Erfinder: Hübner, Daniel, 96110 Scheßlitz (DE)
(74) Vertreter: Siemens Patent Attorneys

(57) **Zusammenfassung**

Die Anmeldung betrifft ein Verfahren zum Betrieb eines modularen Roboters (MDR), wobei der Roboter ein erstes Modul (MD1) als fahrerloses Transportfahrzeug (AGV) und ein zweites Modul (MD2) als Roboterarm umfasst, wobei das erste Modul (MD1,AGV) eine erste Steuerung (CT1) aufweist, die eine erste fehlersichere Positionserfassung (PS1) für das bewegliche Element (MEL1) des ersten Moduls (MD1,AGV) aufweist, wobei das zweite Modul (MD2, Roboterarm) eine erste und eine zweite einfache Positionserfassung (PR1,PR2) des mindestens einen beweglichen Elements (MEL2) des zweiten Moduls (MD2) aufweist, wobei aus der ersten und der zweiten einfachen Positionserfassung (PR1,PR2) des mindestens einen beweglichen Elements (MEL2) des zweiten Moduls (MD2) eine zweite fehlersichere Positionserfassung (PS2) kombiniert wird, und wobei aus der ersten fehlersicheren Positionserfassung (PS1) und der zweiten fehlersicheren Positionserfassung (PS2) eine kombinierte fehlersichere Positionserfassung (PSC) für den modularen Roboter (MDR) kombiniert bzw. ermittelt wird. Daneben betrifft die Erfindung auch einen modularen Roboter (MDR), ein Kollisionsschutzsystem (CPS) und ein entsprechendes Computerprogrammprodukt (CPP).

## Beschreibung

Die Erfindung betrifft ein Verfahren zum Betrieb, insbesondere zur Überwachung, eines modularen Roboters, wobei der Roboter mindestens zwei Module, ein erstes Modul und ein zweites Modul umfasst, wobei beide Module jeweils mindestens ein bewegliches Element aufweisen,
wobei die beweglichen Elemente der beiden Module zusammen eine kinematische Kette bilden, wobei das erste Modul eine von dem zweiten Modul unabhängige erste Steuerung aufweist, wobei die erste Steuerung eine erste fehlersichere Positionserfassung für das bewegliche Element des ersten Moduls aufweist, umfassend einen Schritt des Steuerns und/oder Überwachens des zweiten Moduls umfassend eine zweite Positionserfassung mindestens eines beweglichen Elements des zweiten Moduls.

Daneben betrifft die Erfindung einen modularen Roboter umfassend mindestens zwei Module, ein erstes Modul und ein zweites Modul, wobei beide Module jeweils mindestens ein bewegliches Element aufweisen, wobei die beweglichen Elemente der beiden Module zusammen eine kinematische Kette bilden, wobei das erste Modul eine von dem zweiten Modul unabhängige erste Steuereinheit aufweist, wobei die erste Steuereinheit eine erste fehlersichere Positionserfassung für das bewegliches Element des ersten Moduls aufweist wobei der modulare Roboter weiterhin eine erste einfache Positionserfassung mindestens eines beweglichen Elements des zweiten Moduls umfasst.

Daneben betrifft die Erfindung ein Kollisionsschutzsystem umfassend mindestens einen Computer.

Ferner betrifft die Erfindung ein Computerprogrammprodukt, das direkt in den internen Speicher eines Computers geladen werden kann und computerlesbare Programmittel umfasst, mit denen die Schritte des Verfahrens gemäß der Erfindung ausgeführt werden.

Zur Wahrung der Betriebssicherheit von Robotern ist es eine Kernaufgabe, Kollisionen - insbesondere mit Personen in einem Gefahrenbereich - zu vermeiden. Hierzu ist es essenziell, die Positionen kollisionsgefährlicher Elemente des Roboters zu kennen. Die Kenntnis der Positionen zu jedem Zeitpunkt setzt voraus, dass eine fehlersichere Erfassung erfolgt.

Eine fehlersichere Positionserfassung setzt eine zweikanalige und diversitäre Erfassung voraus.

Eine zweikanalige Struktur ist im Gegensatz zu einer einkanaligen Struktur gegenüber Einzelfehlern ausfallsicher. Im Falle eines Ausfalls oder eines Versagens in einem Kanal ist der jeweils andere Kanal noch in der Lage zumindest eine Sicherheitsfunktion - bzw. den sicheren Zustand einzuleiten - auszuführen.

Eine Diversität liegt darüber hinaus vor, wenn in den jeweiligen Kanälen der zwei- oder mehrkanaligen Struktur unterschiedliche technische Lösungen für die gleiche Funktion vorgesehen sind. Diese technischen Lösungen können sowohl als Hardware als auch als Software vorgesehen sein.

Die fehlersichere Position des AGV/AMR wird heute durch sogenannte Safety-taugliche Geber, z.B. TR Electronics erfasst. Das Attribut "Safety-tauglich" bezieht sich auf eine sogenannte Sicherheitsanforderungsstufe. Die Sicherheitsanforderungsstufe ist ein Begriff aus dem Gebiet der Funktionalen Sicherheit und wird in der internationalen Normung gemäß IEC61508/IEC61511 auch als Sicherheitsstufe oder Sicherheits-Integritätslevel (entlehnt aus dem englischen ,Safety Integrity Level', kurz SIL) bezeichnet. Je höher der SIL eines sicherheitsbezogenen Systems, umso geringer ist die Wahrscheinlichkeit, dass das System die geforderte Sicherheitsfunktion nicht ausführt. Die Erfüllung einer Sicherheitsanforderungsstufe hängt vom betrachteten Gesamtsystem ab.

Sofern eine zweikanalige und diversitäre und damit in der Terminologie dieser Offenbarung fehlersichere Positionserfassung gewährleistet ist, ist es möglich, die auf unterschiedliche Weise erfassten Positionen desselben Elements zu vergleichen und bei Abweichungen jenseits einer Toleranzschwelle den Betrieb zu beenden.

Aus der EP1366867B1 ist bereits ein Verfahren bekannt zum Vermeiden von Kollisionen zwischen einem Roboter und wenigstens einem anderen Objekt.

Eine fehlersichere Position kann beispielsweise in der fehlersicheren speicherprogrammierbaren Steuerung (SPS) der Firma Siemens SIMATIC S7 berechnet werden, sofern die sensorische Positionserfassung gleichfalls fehlersicher ausgebildet ist.

Für die Sicherheit von Industrierobotern gelten die europäisch harmonisierten Normen EN ISO 10218-1 und EN ISO 10218-2.

Eine fehlersichere Positionserfassung bei einem modular aufgebauten Roboter ist in der Regel nur möglich, wenn alle Module eine harmonisierte Sensorik, Regelung und Steuerung aufweisen. Module verschiedener Hersteller lassen sich infolge einer meist nicht konsequent durchgeführten Standardisierung in der Regel nicht zu einem sicher betreibbaren modularen Roboter zusammenfügen, weil es schon an einer sicheren Positionserkennung kollisionsgefährdeter Elemente der einzelnen Module fehlt.

Ausgehend von den Problemen und Nachteilen des Standes der Technik hat es sich die Erfindung zur Aufgabe gemacht, ein Verfahren eingangs definierter Art derart weiterzubilden, sodass die erläuterten Probleme und Nachteile vermieden werden.

Zur erfindungsgemäßen Lösung der Aufgabe wird ein Verfahren eingangs definierter Art mit den zusätzlichen Merkmalen des Kennzeichens des unabhängigen Anspruchs 1 vorgeschlagen. Daneben schlägt die Erfindung ein entsprechendes Computerprogrammprodukt vor. Die jeweils abhängigen Unteransprüche beinhalten vorteilhafte Weiterbildungen der Erfindung.

Konkret hat es sich die Erfindung daher zur Aufgabe gemacht, die Positionserkennung von Elementen modular aufgebauter Roboter fehlersicher auszubilden, sodass eine Betriebssicherheit gewährleistet werden kann.

Zur Verbesserung der Betriebssicherheit trotz Modularität und Erfüllung einschlägiger Sicherheitsvorschriften sieht die Erfindung die zusätzlichen Schritte des Verfahrens vor:
(b) Erfassen der Position des beweglichen Elements des zweiten Moduls mittels einer dritten Positionserfassung, die als an diesem Element anbringbare Positionssonde ausgebildet ist,
(c) Kombinieren der zweiten Positionserfassung mit der dritten Positionserfassung, zu einer zweiten fehlersicheren Positionserfassung,
(d) Kombinieren der ersten fehlersicheren Positionserfassung mit der zweiten fehlersicheren Positionserfassung zu einer kombinierten fehlersicheren Positionserfassung für den modularen Roboter.

Ebenfalls zur Problemlösung trägt ein modularer Roboter der eingangs definierter Art bei, der
(b) eine zweite einfache Positionserfassung aufweist umfassend eine anbringbare Positionssonde zum Erfassen der Position des beweglichen Elements des zweiten Moduls,
(c) wobei eine zweite Steuereinheit des zweiten Moduls und/oder die erste Steuereinheit (CT1) und/oder eine übergeordnete dritte Steuereinheit ausgebildet und vorbereitet ist:
   i. die zweite einfache Positionserfassung der mit der ersten einfachen Positionserfassung zu einer zweiten fehlersicheren Positionserfassung zu kombinieren, und
   ii. die erste fehlersichere Positionserfassung mit der zweiten fehlersicheren Positionserfassung zu einer kombinierten fehlersicheren Positionserfassung für den modularen Roboter zu kombinieren.

Bei der ersten Steuereinheit handelt es sich bevorzugt um eine fehlersichere Steuerung eines automatisch geführten Fahrzeugs (Automated Guided Vehicle, AGV) oder um einen autonomen mobilen Roboter (autonomous mobile robot, AMR). Das automatisch geführte Fahrzeug folgt im Wesentlichen festen Bahnen. Der Unterscheid zwischen einem automatisch geführten Fahrzeug zu einem autonomen mobilen Roboter kann anhand eines Beispiels verdeutlicht werden. Beim autonomen mobilen Roboter ist die zu fahrende Bahn vorher nicht bekannt, dies wird zur Laufzeit berechnet. Steht ein Hindernis in der Bahn, berechnet die Steuerung des autonomen mobilen Roboters die Ausweichroute; das automatisch geführte Fahrzeug würde einfach stehen bleiben. In der Folge ist stets sowohl das automatisch geführte Fahrzeug als auch der autonome mobile Roboter gemeint - es sei denn es kommt explizit auf den Unterschied an.

Die erfindungsgemäße Lösung der vorab beschriebenen technischen Probleme ist gleichfalls definiert durch die unabhängigen Ansprüche. Die abhängigen Ansprüche beschäftigen sich mit vorteilhaften Weiterbildungen der Erfindung. Für den Fachmann sinnvolle Kombinationen der Gegenstände der unabhängigen Ansprüche mit vorliegend offenbarten Merkmalen von Weiterbildungen auch neben den explizit in diesem Dokument offenbarten Rückbezügen der abhängigen Ansprüche sind der Erfindung gleichfalls zuzurechnen.

Einige Aspekte und mögliche Ausgestaltungen der Erfindung sind nachfolgend an einem Beispiel erläutert. Durch die erfindungsgemäßen Maßnahmen wird eine Kollisionsvermeidung zwischen einem modular aufgebauten autonomen mobilen Roboter, bestehend aus einem Roboter, welcher bevorzugt auf einem autonom geführten Fahrzeug (AGV) oder auf einem autonomen mobilen Roboter montiert ist, und zum Beispiel den Maschinenbedienern erreicht. Eine besondere Herausforderung besteht darin, dass die Position des autonomen mobilen Roboters fehlersicher (zweikanalig, diversitär, so dass ein beliebiger Fehler nicht zum Ausfall der sicheren Positionserfassung führt) erfasst werden muss. Der modular aufgebaute Roboter kann beispielsweise aus einem Roboter, welcher an einem automatisierten fahrerlosen Fahrzeug (AGV=Automated Guided Vehicle) montiert ist, bestehen.

Ein besonderes Problem hierbei besteht in der Ermittlung der fehlersicheren Position des Roboters. Diese wird häufig in der Hersteller-spezifischen Robotersteuerung berechnet und ist aber nicht zugänglich für andere Steuerungen oder Anwendungen. Damit ist eine fehlersichere Lokalisierung des autonomen mobilen Roboters nicht möglich. Bei dem autonomen mobilen Roboter der vorher beschriebenen Art ist es sinnvoll, dass das automatisierte fahrerlose Fahrzeug (AGV) und der Roboter als eine Einheit betrachtet werden. Sobald sich das automatisierte fahrerlose Fahrzeug (AGV) oder ein Roboter-Arm bewegt, hat dies Auswirkungen auf die kartesische Position des autonomen mobilen Roboters. Eine sichere Positionserfassung ist konventionell nicht möglich, da die Robotersteuerung die sichere Position nicht für andere Steuerungen zur Verfügung stellt. Beispielsweise einheitliche Schnittstellen in der Art eines Standards, an den sich die verschiedenen Roboterhersteller halten würden, sind nicht gegeben.

Gegenwärtig liefert eine Robotersteuerung der jeweiligen einzelnen Module die nicht-sichere Position der Gelenke an eine Steuerung des automatisierten fahrerlosen Fahrzeugs, zum Beispiel die fehlersichere SIMATIC S7.

Eine vorteilhafte Weiterbildung der Erfindung sieht vor, dass die Positionssonde die Positionskoordinaten kabellos übermittelt bzw. die Positionssonde ausgebildet ist, die Positionskoordinaten kabellos zu übermitteln.

Eine vorteilhafte Weiterbildung der Erfindung sieht vor, dass die anbringbare Positionssonde einen Transponder aufweist oder als Transponder ausgebildet ist, der für eine Ortung ausgebildet ist. Beispielsweise kann das zweite Modul an den Gelenken mit je einen Transponder als Positionssonde (z.B. SIMATIC RTLS Transponder) versehen sein. Diese Positionssonde ermittelt die Position X, Y und Z (z.B. via GPS) und überträgt diese an die SIMATIC S7. Ein Transponder ist hierbei ein Funk-Kommunikationsgerät, das eingehende Signale aufnimmt und automatisch beantwortet bzw. weiterleitet. Beispielsweise, der kompakte Transponder SIMATIC RTLS4083T ist für die Ortung von Objekten vorgesehen. Diese Transponder liefern in der Regel räumliche Koordinaten. Die Software in einer fehlersicheren Steuerung, zum Beispiel einer SIMATIC S7, insbesondere eines automatisierten fahrerlosen Fahrzeugs, überprüft die beiden nicht-sicheren Positionen (eine erste ermittelte Position kommt über die Robotersteuerung, eine zweite ermittelte Position kommt jeweils über einen Transponder) auf Gleichheit. Stimmen beide Positionen in einem vorbestimmten Toleranzrahmen überein, kann dies als fehlersichere Position angenommen werden und die fehlersichere Position des autonomen mobilen Roboters bestimmt werden.

Vorteile der Erfindung bestehen insbesondere in einer Unabhängigkeit vom Roboter-Hersteller und in einer Robustheit gegenüber Umgebungseinflüssen (Licht, Staub). Eine vergleichbare Zuverlässigkeit insbesondere unabhängig von den Umgebungsbedingungen ließe sich mit einem kamerabasierten System nicht erzielen, weil dieses auf eine hinreichende Durchsicht angewiesen ist. Darüber hinaus ist die Lösung nach der Erfindung vielseitig einsetzbar für unterschiedliche Roboterlösungen, die modular aufgebaut sind.

Unter einer kinematischen Kette versteht die Erfindung, dass je zwei feste Körper zu einer Kette kinematisch eindeutig miteinander verbunden sind, wie zum Beispiel bei Robotergreifarmen oder Baggerarmen. Wie aus der allgemeinen Getriebetechnik bekannt, sind die einzelnen miteinander verbundenen Körper meistens mit einem Gelenk mit Freiheitsgrad f=1 aneinander angebracht. In der Regel handelt es sich um eine offene Kette, die nicht zwangsläufig ist. Meistens ist für jedes Gelenk ein individueller Antrieb vorgesehen. Auch kann an jeder Verbindungsstelle je ein Getriebe mit jeweils geschlossener kinematischer Kette vorgesehen sein.

Die Erfindung beschäftigt sich mit kollisionsgefährlichen Elementen, d. h. es geht um bewegliche Elemente, die nicht vollständig mittels einer Einhausung vor Kollision geschützt sind.

Im Folgenden ist die Erfindung anhand eines speziellen Ausführungsbeispiels zur Verdeutlichung näher beschrieben. Es zeigen:

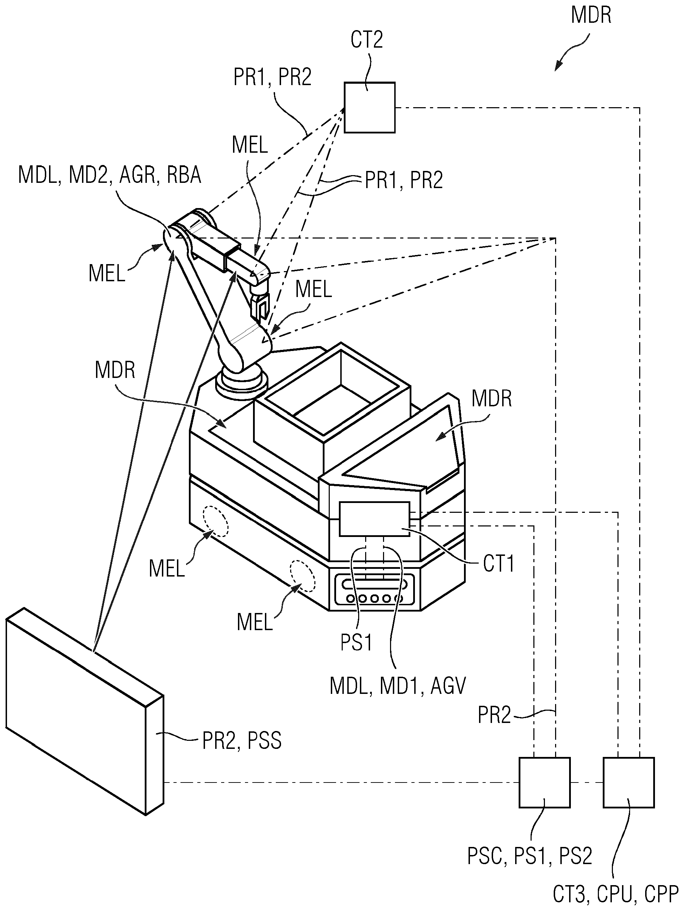

- Figur 1: eine schematische, vereinfachte Darstellung eines modularen Roboters mit zusätzlicher Illustration des Verfahrens nach der Erfindung.

Funktionsgleiche Bauteile sind teilweise mit identischen Bezugszeichen versehen.

Figur 1 zeigt eine schematische, vereinfachte Darstellung eines modularen Roboters MDR. Der modulare Roboter MDR umfasst zwei Module MDL, ein fahrerloses Transportfahrzeug AGV als erstes Modul MD1 und einen autonomen mobilen Roboter AGR als zweites Modul MD2.

Das fahrerlose Transportfahrzeug AGV bildet mit dem modularen Roboter MDR eine kinematische Kette, indem sich Bewegungen des fahrerlosen Transportfahrzeugs AGV direkt auf den modularen Roboter MDR übertragen.

Das fahrerlose Transportfahrzeug AGV weist eine von dem modularen Roboter MDR unabhängige erste Steuerung CT1. Diese erste Steuerung CT1 ist mit einer ersten fehlersichere Positionserfassung PS1 für das bewegliches Element MEL des ersten Moduls MD1 verbunden bzw. weist diese auf.

Der modulare Roboter MDR weist eine erste einfache Positionserfassung PR1 zum Erfassen der Position des beweglichen Elements MEL, das als Roboterarm RBA ausgebildet ist, auf und übermittelt diese Position an eine zweite Steuereinheit CT2. Diese zweite Steuereinheit CT2 ist - anders als in der vereinfachten Illustration schematisch dargestellt - Bestandteil des Roboterarms RBA.

Der Roboterarm RBA ist darüber hinaus an den Gelenken jeweils mit einer zweiten einfachen Positionserfassung PR2 umfassend jeweils eine anbringbare Positionssonde PSS zum Erfassen der Position des beweglichen Elements MEL versehen. Zur Vereinfachung der Figur ist nur eine Positionssonde PSS vergrößert dargestellt und die eigentliche jeweilige Anbringung an dem Roboterarm RBA ist mittels eines Pfeils illustriert. Die Positionssonde PSS ist als Transponder TRP ausgeführt, der für eine Ortung ausgebildet ist. Die Position aus der zweiten einfachen Positionserfassung PR2 wird kabellos an eine kombinierte fehlersichere Positionserfassung PSC übermittelt. Daneben empfängt die kombinierte fehlersichere Positionserfassung PSC die erste einfache Positionserfassung PR1 sowie die erste fehlersichere Positionserfassung PS1 und kombiniert diese Informationen zu einer zweiten fehlersicheren Positionserfassung PS2 und schließlich zu einer kombinierten fehlersicheren Positionserfassung PSC für den gesamten modularen Roboter MDR einschließlich aller beweglichen Elemente MEL.

Die kombinierte fehlersichere Positionserfassung PSC für den gesamten modularen Roboter MDR wird an eine übergeordnete dritte Steuereinheit CT3 übermittelt, die alle Aktionen des modularen Roboter MDR übergeordnet mittels der zweiten und dritten Steuereinheit CT2, CT3 steuert. Diese übergeordnete dritte Steuereinheit CT3 umfasst somit zumindest Teile eines Kollisionsschutzsystems CPS bzw. eines Computerprogrammprodukts CPP, lauffähig auf mindestens einen Computer CPU vorbereitet zur Durchführung des Verfahrens nach der Erfindung zur Steuerung des modularen Roboters MDR nach der Erfindung. Das Kollisionsschutzsystem CPS bzw. das Computerprogrammprodukt CPP können als verteiltes System mit verschiedenen Komponenten in verschiedenen Steuerungskomponenten und Sensoren des modularen Roboters MDR lauffähig zur Ausführung des erfindungsgemäßen Verfahrens vorgehalten, gespeichert bzw. vorgesehen sein.

Bisher wurde die Erfindung in Bezug auf das beanspruchte Verfahren beschrieben. Merkmale, Vorteile oder alternative Ausführungsformen hierin können den anderen beanspruchten Gegenständen z. B. dem Computerprogramm oder einer Vorrichtung, d. h. der Vorrichtung oder einem Computerprogrammprodukt zugeordnet sein und umgekehrt. Mit anderen Worten, der Gegenstand, der in Bezug auf die Vorrichtung beansprucht oder beschrieben wird, kann mit Merkmalen verbessert werden, die im Zusammenhang mit dem Verfahren beschrieben oder beansprucht werden, und umgekehrt. In diesem Fall werden die funktionalen Merkmale des Verfahrens durch strukturelle Einheiten des Systems bzw. umgekehrt verkörpert. Im Allgemeinen sind in der Informatik eine Softwareimplementierung und eine entsprechende Hardware-Implementierung gleichwertig. So kann beispielsweise ein Verfahrensschritt zum "Speichern" von Daten mit einer Speichereinheit und entsprechenden Anweisungen zum Schreiben von Daten in den Speicher durchgeführt werden. Zur Vermeidung von Redundanz kann die Vorrichtung auch in den unter Bezugnahme auf das Verfahren beschriebenen alternativen Ausführungsformen verwendet werden, diese Ausführungsformen werden für die Vorrichtung nicht nochmals explizit beschrieben.

Es ist Teil der Erfindung, dass nicht alle Schritte des Verfahrens notwendigerweise auf derselben Komponenten- oder Computerinstanz ausgeführt werden müssen, sondern auch auf verschiedenen Computerinstanzen ausgeführt werden können.

Darüber hinaus ist es möglich, dass einzelne Schritte des oben beschriebenen Verfahrens in einer Einheit und die restlichen Komponenten in einer anderen Einheit als verteiltes System durchgeführt werden können.

## Patentansprüche

1. Verfahren zum Betrieb eines modularen Roboters (MDR), wobei der Roboter mindestens zwei Module (MDL), ein erstes Modul (MD1) und ein zweites Modul (MD2) umfasst, wobei beide Module (MDL) jeweils mindestens ein bewegliches Element (MEL) aufweisen,
wobei die beweglichen Elemente (MEL) der beiden Module (MDL) zusammen eine kinematische Kette bilden, wobei das erste Modul (MD1) eine erste Steuerung (CT1) aufweist,
wobei die erste Steuerung (CT1) eine erste fehlersichere Positionserfassung (PS1) für das bewegliches Element (MEL) des ersten Moduls (MD1) aufweist,
wobei das zweite Modul (MD2) eine erste einfache Positionserfassung (PR1) mindestens eines beweglichen Elements (MEL) des zweiten Moduls (MD2) aufweist,
umfassend:
(a) Steuern des zweiten Moduls (MD2) umfassend ein Erfassen der Position des mindestens eines beweglichen Elements (MEL) des zweiten Moduls (MD2) mittels der ersten einfachen Positionserfassung (PR1),
**gekennzeichnet durch** die weiteren Schritte:
(b) Erfassen der Position des beweglichen Elements (MD2) des zweiten Moduls (MD2) mittels einer zweiten einfachen Positionserfassung (PR2), die als an diesem Element (MD2) anbringbare Positionssonde (PSS) ausgebildet ist,
(c) Kombinieren der ersten einfachen Positionserfassung (PR1) mit der zweiten einfachen Positionserfassung (PR2), zu einer zweiten fehlersicheren Positionserfassung (PS2),
(d) Kombinieren der ersten fehlersicheren Positionserfassung (PS1) mit der zweiten fehlersicheren Positionserfassung (PS2) zu einer kombinierten fehlersicheren Positionserfassung (PSC) für den modularen Roboter (MDR).

2. Verfahren nach Anspruch 1, wobei das erste Modul (MD1) ein fahrerloses Transportfahrzeug (AGV) ist.

3. Verfahren nach Anspruch 1, wobei das zweite Modul (MD2) ein autonomer mobiler Roboter (AGR) umfassend einen Roboterarm (RBA) ist.

4. Modularer Roboter (MDR) umfassend mindestens zwei Module (MDL), ein erstes Modul (MD1) und ein zweites Modul (MD2),
wobei beide Module (MDL) jeweils mindestens ein bewegliches Element (MEL) aufweisen,
wobei die beweglichen Elemente (MEL) der beiden Module (MDL) zusammen eine kinematische Kette bilden, wobei das erste Modul (MD1) eine erste Steuereinheit (CT1) aufweist, wobei die erste Steuereinheit (CT1) eine erste fehlersichere Positionserfassung (PS1) für das bewegliche Element (ME1) des ersten Moduls (MD1) aufweist,
wobei das zweite Modul (MD2) eine erste einfache Positionserfassung (PR1) mindestens eines beweglichen Elements (MEL) des zweiten Moduls (MD2) aufweist, **gekennzeichnet durch**:
- eine zweite einfache Positionserfassung (PR2) umfassend eine anbringbare Positionssonde (PSS) zum Erfassen der Position des beweglichen Elements (MEL) des zweiten Moduls (MD2),
- wobei eine zweite Steuereinheit (CT2) des zweiten Moduls (MD2) und/oder die erste Steuereinheit (CT1) und/oder eine übergeordnete dritte Steuereinheit (CT3) ausgebildet und vorbereitet ist:
i. die erste einfache Positionserfassung (PR1) der mit der zweiten einfachen Positionserfassung (PR2) zu einer zweiten fehlersicheren Positionserfassung (PS2) zu kombinieren, und
ii. die erste fehlersichere Positionserfassung (PS1) mit der zweiten fehlersicheren Positionserfassung (PS2) zu einer kombinierten fehlersicheren Positionserfassung (PSC) für den modularen Roboter (MDR) zu kombinieren.

5. Modularer Roboter (MDR) nach Anspruch 4, wobei das erste Modul (MD1) ein fahrerloses Transportfahrzeug (AGV) ist.

6. Modularer Roboter (MDR) nach Anspruch 4 oder 5, wobei das zweite Modul (MD2) ein autonomer mobiler Roboter (AGR) umfassend einen Roboterarm (RBA) ist.

7. Modularer Roboter (MDR) nach einem der Ansprüche 4 bis 6, wobei die Positionssonde (PSS) ausgebildet ist, die Position kabellos zu übermitteln.

8. Modularer Roboter (MDR) nach Anspruch 7, wobei die anbringbare Positionssonde (PSS) einen Transponder (TRP) aufweist, der für eine Ortung ausgebildet ist.

9. Kollisionsschutzsystem (CPS) umfassend mindestens einen Computer (CPU) vorbereitet zur Durchführung des Verfahrens nach mindestens einem der vorhergehenden Ansprüche 1 bis 3.

10. Computerprogrammprodukt (CPP), das direkt in den internen Speicher eines Computers (CPU) geladen werden kann und computerlesbare Programmittel umfasst, mit denen die Schritte des Verfahrens nach mindestens einem der vorhergehenden Ansprüche 1 bis 3 ausgeführt werden, wenn das Produkt auf einem Computer (CPU) läuft.
